**Europäisches Patentamt**

**European Patent Office**

**Office européen des brevets**

(19)

(11) Veröffentlichungsnummer : **0 417 077 B1**

(12) # EUROPÄISCHE PATENTSCHRIFT

(45) Veröffentlichungstag der Patentschrift :
**15.01.92 Patentblatt 92/03**

(51) Int. Cl.$^5$ : **G01C 21/22, G09B 29/10**

(21) Anmeldenummer : **88902407.1**

(22) Anmeldetag : **18.03.88**

(86) Internationale Anmeldenummer :
**PCT/DE88/00168**

(87) Internationale Veröffentlichungsnummer :
**WO 88/08119 20.10.88 Gazette 88/23**

(54) **VERFAHREN UND VORRICHTUNG ZUR AUSWAHL ODER EINGABE DES ZIELES BEI EINEM NAVIGATIONSSYSTEM IM KRAFTFAHRZEUG.**

(30) Priorität : **11.04.87 DE 3712360**

(43) Veröffentlichungstag der Anmeldung :
**20.03.91 Patentblatt 91/12**

(45) Bekanntmachung des Hinweises auf die
Patenterteilung :
**15.01.92 Patentblatt 92/03**

(84) Benannte Vertragsstaaten :
**DE FR GB IT NL**

(56) Entgegenhaltungen :
**EP-A- 0 133 249**
**DE-A- 3 527 240**
**US-A- 4 458 238**

(73) Patentinhaber : **ROBERT BOSCH GMBH**
**Postfach 50**
**W-7000 Stuttgart 1 (DE)**

(72) Erfinder : **GEISER, Georg**
**Reinhold-Schneider-Str. 71h**
**W-7500 Karlsruhe 51 (DE)**

EP 0 417 077 B1

Jouve, 18, rue Saint-Denis, 75001 PARIS

## Beschreibung

Die Erfindung betrifft ein Verfahren mit einer Vorrichtung zur Auswahl oder Eingabe des Zieles mit Hilfe des Zielnamens bei der Benutzung eines Navigationssystems im Kraftfahrzeug. Heutige oder in Entwicklung befindliche Navigationssysteme im Kraftfahrzeug geben dem Fahrer während der Fahrt Hinweise zur Wahl der Fahrtrichtung an Kreuzungen, nachdem der Fahrer sein Fahrziel dem Navigationssystem bekannt gegeben hat. Als Fahrziele kommen sämtliche Orte des Gebietes in Betracht, dessen Landkarte im Navigationssystem digital abgespeichert ist. Im Hinblick auf die Verkehrssicherheit kommt der Gestaltung der Art und Weise, wie der Fahrer das Fahrziel bekanntgibt, besondere Bedeutung zu.

Die Übermittlung des Fahrzieles vom Fahrer an das Navigationssystem kann durch Verwendung einer Straßenkarte, eines Zifferncodes oder des Zielnamens (Ort, Straße und Hausnummer) geschehen. Sowohl die Handhabung einer Straßenkarte als auch eines Handbuches für die Entnahme des Zifferncodes des Fahrzieles sind zu umständliche Verfahren, die für eine Anwendung im Kraftfahrzeug kaum in Frage kommen. Die Festlegung des Fahrzieles durch den Fahrer mit Hilfe des Zielnamens kann durch die Auswahl des Zieles aus der im Navigationssystem gespeicherten Liste aller möglicher Zielnamen (Zielliste) erfolgen. Nur in Sonderfällen ist die Eingabe eines Zielnamens erforderlich, der noch nicht in der Zielliste enthalten ist. Das Verfahren der Auswahl des Zieles hat den Vorteil, daß der Fahrer nur die Mindestmenge von Buchstaben und Ziffern des Zielnamens eingeben muß, die eine eindeutige Zuordnung zu einem Ziel der Zielliste erlaubt. Für die Auswahl oder Eingabe des Zielnamens wäre die Spracheingabe das ideale Verfahren, das jedoch wegen der noch vorhandenen technischen Beschränkungen heute und für die nahe Zukunft noch nicht in Betracht kommt. Die Auswahl oder Eingabe des Zielnamens mit Hilfe einer Tastatur (siehe z. B. DE-A-2925656), sei es mit einer alphanumerischen Volltastatur oder mit einer der zahlreichen Tastaturvarianten mit reduzierter Tastenzahl, hat den Nachteil, daß sie nur während des Stillstandes des Fahrzeuges durchgeführt werden darf, da sie den Fahrer während der Fahrt zu stark ablenken würde. Für die Auswahl des Zieles aus der Zielliste ist als Verfahren das wortweise Absuchen ("Rollen") bekannt, bei dem mittels zweier Richtungsschalter die Zielliste, in der die Ziele alphabetisch abgelegt sind, hinter einem optischen Anzeigefenster vorbeigeschoben werden kann. Auch dieses Verfahren hat wegen der großen Anzahl der möglichen Ziele eine zu große Ablenkungswirkung, um es während der Fahrt benutzen zu können. Ähnliche Vorrichtungen sind in DE-A-3527240, EP-A-0133249 bzw US-A-4458238 offenbart.

Der Erfindung liegt die Aufgabe zugrunde, ein Verfahren zurAuswahl oder Eingabe von Zielen mit Hilfe des Zielnamens in ein Navigationssystem zu entwickeln, das so geringe Ablenkungswirkung besitzt, daß es auch während der Fahrt benutzt werden kann.

Erfindungsgemäße wird diese Aufgabe durch die Merkmale des Anspruchs 1 gelöst.

Die mit der Erfindung erzielbaren Vorteile bestehen insbesondere darin, daß der Fahrer eine Zieleingabe oder Zielauswahl während der Fahrt weitgehend "blind" durchführen kann, d.h. ohne daß seine visuelle Aufmerksamkeit zu stark in Anspruch genommen und damit in gefährlicher Weise vom Verkehrsgeschehen abgelenkt wird. Weiter ist durch die stellenweise Buchstabeneingabe der Vorteil gegeben, daß im Vergleich zum wortweisen Absuchen der Zieles der Auswahlvorgang wesentlich verkürzt ist. Eine zusätzliche Verkürzung der Eingabezeit wird durch Ausnutzung der Auftrittswahrscheinlichkeiten von Einzelbuchstaben und von Buchstabengruppen erzielt. Die buchstabenweise (und ziffernweise) akustische Rückmeldung durch Sprachausgabe stellt im Vergleich zur wortweisen Sprachausgabe eine für den Fahrer erträgliche Informationsbelastung dar und führt zur Reduzierung der Eingabezeit. Außerdem ist für die Sprachausgabe von Buchstaben und Ziffern keine Vollsynthese der Sprache erforderlich, sondern es können digital gespeicherte Äußerungen eines menschlichen Sprechers verwendet werden, so daß eine gute bis sehr gute Sprachqualität erreicht werden kann.

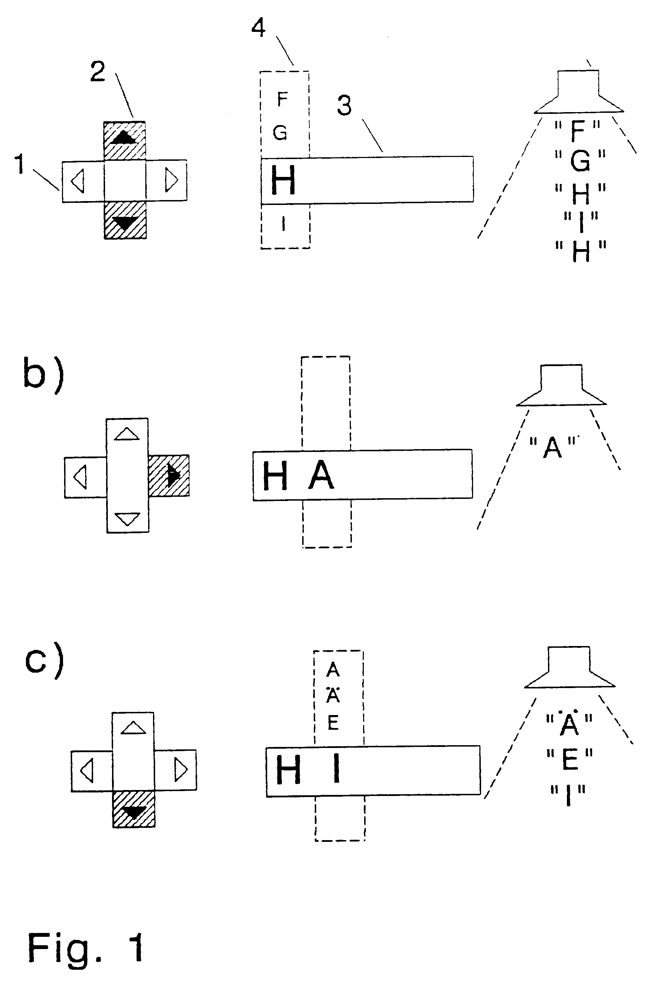

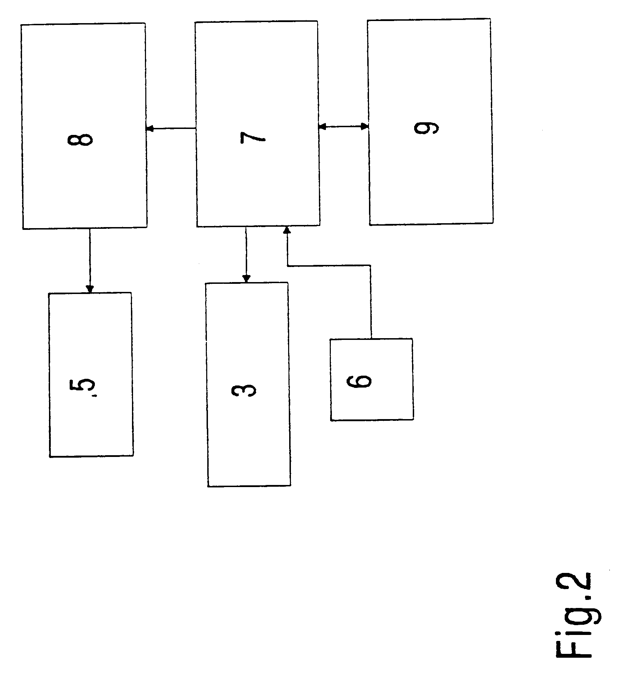

Ausführungsbeispiele der Erfindung sind in Figur 1 und 2 dargestellt. Es zeigt Figur 1 das Zusammenwirken von Eingabeelement, optischer Anzeige und Sprachausgabe. Figur 2 zeigt ein Blockschaltbild des gesamten Gerätes.

In Figur 1 ist das zweidimensionale Eingabeelement 1, 2 zur Auswahl der Buchstabenstelle und zum Durchlaufen des Alphabetes pro Buchstabenstelle dargestellt. Dieses Eingabeelement kann aus zwei senkrecht zueinander stehenden Wippen bestehen oder es kann als Steuerknüppel ausgebildet sein. Auch eine entsprechende graphische Darstellung auf einem Bildschirm mit Berühreingabe ist geeignet. Die Betätigung der horizontalen Komponente 1 dient zur schrittweisen Auswahl der Buchstabenstelle, indem bei Drücken auf die linke bzw. rechte Seite jeweils ein binäres Signal erzeugt wird, das die nächste links bzw. rechts neben der Ausgangsposition liegende Buchstabenstelle aktiviert. Die vertikale Komponente 2 dient zum schrittweisen Durchlaufen des Buchstabenalphabetes so lange, bis an der angewählten Buchstabenstelle ein Buchstabe erscheint, der mit demjenigen an der entspechenden Stelle des Zielnamens übereinstimmt. Die stellenweise Auswahl einer Zahl, z.B. der Hausnummer, wird in entsprechender Weise durchgeführt. Zur Abkürzung des Auswahlvorganges kann die vertikale Komponente des Eingabeelementes so gestaltet werden, daß beim Drücken auf das obere oder untere Ende mit zunehmender Betätigungskraft und/oder wachsendem Betätigungsweg die Durchlaufgeschwindigkeit kontinuierlich oder in Stufen gesteigert wird. Eine weitere Maßnahme ist die Reduzierung der Menge der durchlaufenden Buchstaben anhand des Kontextes oder mit wachsender Auslenkung oder mit steigendem Druck auf das Eingabeelement 2. Bei der Wahl der Teilmenge der Buchstaben können die Auftrittswahrscheinlichkeiten von Einzelbuchstaben und Buchstabengruppen berücksichtigt werden. Beispielsweise ist aus dem Verzeichnis der Postleitzahlen zu entnehmen, daß bei deutschen Ortsnamen auf den Anfangsbuchstaben "H" nur die Buchstaben "Ä", "E", "I", "O", "Ö", "U", "Ü" und "Y" folgen können, so daß bei der zweiten Buchstabenstelle nach "H" die Teilmenge der maximal zu durchlaufenden Buchstaben auf 8 begrenzt werden kann. Eine weitere Möglichkeit der Einschränkung der Zahl der zu durchlaufenden Buchstaben ergibt sich aus der in der Zielliste enthaltenen Zielnamen. Mit zunehmender Anzahl der vom Benutzer ausgewählten Buchstabenstellen des Zielnamens nimmt die Zahl der in Frage kommenden alternativen Zielnamen der Zielliste ab. Für die nächste auszuwählende Buchstabenstelle sind daher nur die Buchstaben zu berücksichtigen, die an dieser Stelle in der Teilmenge der durch die vorhergehenden Buchstabenstellen eingegrenzten Zielnamen vorkommen. Z.B. sind für die Auswahl der Buchstabenfolge "KARLSR", die für die Auswahl des Zielnamens "KARLS-RUHE" aus dem Verzeichnis der Postleitzahlen notwendig und hinreichend ist, der Reihe nach 29, 12, 18, 12 und 8 Buchstaben in die durchlaufende Teilmenge einzubeziehen.

Die optische Anzeige 3 dient zur Darstellung des eingegebenen Zielnamens und zur Rückmeldung der Auswahl der Buchstaben- oder Ziffernstelle und des Durchlaufvorganges des Alphabetes oder einer Teilmenge davon. Ein Teil der durchlaufenden Buchstaben ist in Figur 1 durch den gestrichelt umrandeten Bereich 4 dargestellt. Neben der optischen Rückmeldung des Auswahlvorganges ist für die Anwendung im Kraftfahrzeug die akustische Rückmeldung durch Sprachausgabe wesentlich, die durch den Lautsprecher 5 angedeutet ist. Der momentan auf dem Anzeigefeld an der angewählten Stelle dargestellte Buchstabe wird durch eine Sprachausgabe in möglichst kurzer Form mitgeteilt, so daß der Fahrer das Durchlaufen der Buchstaben oder Ziffern mit dem Ohr verfolgen kann und seinen Blick nur gelegentlich vom Verkehrsgeschehen abwenden muß, um die Anzeige 3 zu beobachten. Hierfür wird eine Sprachausgabe benötigt, deren Vokabular die Buchstaben und Ziffern in üblicher Sprechweise umfaßt, also "A",..., "Jot",..., "Zet" und "Null",..., "Neun". Dem Nachteil der Verwechslungsgefahr von Buchstaben steht der Vorteil der kurzen Sprechdauer gegenüber; außerdem können Verwechslungen beim Hören der Buchstaben oder Ziffern leicht durch einen Blick auf die optische Anzeige 3 entdeckt werden. Es ist aber auch möglich, die Buchstaben gemäß einem eingeführten Buchstabieralphabet anzusagen, z.B. "Anton", "Berta", "Cäsar" usw. Wesentlich ist, daß durch diese Art der Sprachausgabe auf die Verfahren der Vollsynthese der menschlichen Sprache verzichtet werden kann, vielmehr kann auf digital gespeicherte Äußerungen eines menschlichen Sprechers zurückgegriffen werden und damit eine hohe Natürlichkeit und Verständlichkeit der Sprache erzielt werden. Sobald eine eindeutige Zuordnung der eingegebenen Buchstaben zu einem der gespeicherten Zielnamen gegeben ist, wird dieser Zielname auf der optischen Anzeige 3 dargestellt. Der Benutzer bestätigt durch eine (nicht dargestellte) Quittierungstaste oder durch erneutes Betätigen der rechten Seite der horizontalen Komponente 1 des Eingabeelementes. Besteht der Zielname aus mehreren Teilen, wie Ort, Straße und Hausnummer, so werden die einzelnen Namensteile in der beschriebenen Weise nacheinander eingegeben.

In Figur 1 a-c ist der Ablauf der Eingabe von 2 Buchstaben "HI" dargestellt. Zunächst wird in Figur 1a an der ersten Stelle mit der vertikalen Komponente des Eingabeelementes der Buchstabe "H" eingestellt, wobei an der Sprachausgabe ein "Überschwingen" um einen Buchstaben zu erkennen ist. Nachdem der erste Buchstabe "H" eingestellt ist, wird in Figur 1b durch Druck auf die rechte Seite der horizontalen Komponente des Eingabeelementes die zweite Buchstabenstelle angewählt. Wie oben erwähnt, kommt nach dem Anfangsbuchstaben "H" nur eine Teilmenge von 8 Buchstaben in Frage, aus der gemäß Figur 1c ausgewählt wird.

In Figur 2 ist das Blockschaltbild der Vorrichtung zur Zieleingabe oder-auswahl dargestellt. Mit dem Eingabeelement 6, das die horizontale und vertikale Komponenten 1 und 2 umfaßt wird die stellenweise Buchstabenauswahl durchgeführt. Ein Digitalrechner 7, z.B. ein Mikroprozessor, verarbeitet die Steuersignale des Eingabeelementes 6 und steuert sowohl die optische Anzeige 3 als auch die Sprachausgabe 8 mit dem Lautsprecher 5. Der Rechner 7 vergleicht die eingegebenen Buchstaben mit den im Zielspeicher 9 abgelegten Zielnamen und gibt bei eindeutiger Zuordnung den vollständigen Zielnamen aus.

Eine weitere vorteilhafte Ausgestaltung der Erfindung kann darin bestehen, daß der Benutzer bei unvollständiger Kenntnis der Schreibweise eines Zielnamens oder zur Abkürzung der Eingabe Teile des Zielnamens durch "?" ersetzen kann. Beispielsweise kann das Ziel "GROSS GERAU" durch "?GERAU" abgekürzt eingegeben werden. Für diese Möglichkeit ist es hilfreich, wenn das "?" Zeichen beim Durchlaufen des Alphabetes an vorderster Stelle steht. Setzt man das "?"- Zeichen vor das "A", so kann es durch Betätigen der oberen Seite der vertikalen Komponente des Eingabeelements aktiviert werden.

**Patentansprüche**

1. Verfahren zur Auswahl oder Eingabe des Ziels bei einem Navigationssystem in einem Fahrzeug unter Verwendung eines manuellen Eingabeelementes, einer optischen Anzeige, einer Sprachausgabe und eines Digitalrechners, dadurch gekennzeichnet, daß bei Betätigung des Eingabeelements in horizontaler Richtung (1) die einzugebende Buchstabenstelle ausgewählt wird und bei Betätigung des Eingabeelements in vertikaler Richtung (2) das Buchstabenalphabet durchlaufen wird, bis der einzugebende Buchstabe erreicht wird, daß dieser Auswahlvorgang auf der optischen Anzeige (3) dargestellt wird, und eine akustische Rückmeldung des Auswahlvorganges durch die Sprachausgabe (5, 8) erfolgt und daß die Verarbeitung des Eingabe- oder Auswahlvorganges durch den Digitalrechner (7) durchgeführt wird.

2. Verfahren nach Anspruch 1, dadurch gekennzeichnet, daß das manuelle Eingabeelement (6) zur stellenweisen Buchstabenauswahl zwei zueinander senkrecht stehende Wippen aufweist, die in horizontaler (1) und in vertikaler (2) Richtung nach je zwei Seiten betätigbar sind, daß bei Betätigung links oder rechts in horizontaler Richtung jeweils die schrittweise Anwahl der einzugebenden Buchstabenstelle erfolgt und daß bei Betätigung in vertikaler Richtung oben oder unten ein kontinuierliches oder schrittweises Durchlaufen des Buchstabenalphabets erfolgt.

3. Verfahren nach Anspruch 1, dadurch gekennzeichnet, daß das manuelle Eingabeelement (6) zur stellenweisen Buchstabenauswahl einen Steuerknüppel aufweist, der in horizontaler (1) und in vertikaler(2) Richtung nach je zwei Seiten betätigbar ist, daß bei Betätigung links oder rechts in horizontaler Richtung jeweils die schrittweise Anwahl der einzugebenden Buchstabenstelle erfolgt und daß bei Betätigung in vertikaler Richtung oben oder unten ein kontinuierliches oder schrittweises Durchlaufen des Buchstabenalphabets erfolgt.

4. Verfahren nach Anspruch 1, dadurch gekennzeichnet, daß als manuelles Eingabeelement zur stellenweisen Buchstabenauswahl ein Bildschirm mit einer Berühreingabe verwendet wird, die in horizontaler (1) und in vertikaler (2) Richtung nach je zwei Seiten betätigbar ist, daß bei Betätigung links oder rechts in horizontaler Richtung jeweils die schrittweise Anwahl der einzugebenden Buchstabenstelle erfolgt und daß bei Betätigung in vertikaler Richtung oben oder unten ein kontinuierliches oder schrittweises Durchlaufen des Buchstabenalphabets erfolgt.

5. Verfahren nach einem der vorhergehenden Ansprüche, dadurch gekennzeichnet, daß der jeweils angewählte Buchstabe als sprachliche Äußerung in Form der Ansage der Buchstaben ausgegeben wird.

6. Verfahren nach einem der Ansprüche 1 bis 4, dadurch gekennzeichnet, daß der jeweils angewählte Buchstabe als sprachliche Äußerung unter Verwendung eines Buchstabieralphabetes ausgegeben wird.

7. Verfahren nach einem der vorhergehenden Ansprüche, dadurch gekennzeichnet, daß zur Abkürzung des Eingabevorganges die Durchlaufgeschwindigkeit oder die Schrittweite des Buchstabenalphabetes variierbar ist.

8. Verfahren nach Anspruch 7, dadurch gekennzeichnet, daß die Variation in Abhängigkeit von der Betätigungskraft und/oder vom Betätigungsweg des Eingabeelementes erfolgt.

9. Verfahren nach einem der vorhergehenden Ansprüche, dadurch gekennzeichnet, daß zur Abkürzung des Eingabevorganges unter Auswertung der Auftrittswahrscheinlichkeit von Einzelbuchstaben und/oder von Buchstabengruppen nur eine Teilmenge des Buchstabenalphabetes durchlaufen wird.

10. Verfahren nach einem der vorhergehenden Ansprüche, dadurch gekennzeichnet, daß bei unvollständiger Kenntnis der Schreibweise eines Zielnamens oder zum Zweck der Abkürzung Teile des Zielnamens durch Fragezeichen ersetzt werden.

**Claims**

1. Process for the selection or input of the destination in a vehicle navigation system, using a manual input element, a visual display, a voice output and a digital computer, characterised in that, upon the actuation of the input element in the horizontal direction (1), the letter position to be input is selected and, upon actuation of the input element in the vertical direction (2), the letter alphabet is run through until the letter to be input is reached, in that this selection procedure is represented on the visual display (3), and an acoustic acknowledgment of the selection procedure takes place through the voice output (5, 8) and in that the processing of the input or selection procedure is carried out by the digital computer (7).

2. Process according to Claim 1, characterised in that the manual input element (6) has for the position-by-position letter selection two mutually perpendicular rockers, which can be actuated in the horizontal (1) and in the vertical (2) direction, to two sides in each case, in that, upon actuation to the left or right in the horizontal direction, in each case the step-by-step selection of the letter position to be input takes place and in that, upon actuation in the vertical direction up or down, a continuous or step-by-step running-through of the letter alphabet takes place.

3. Process according to Claim 1, characterised in that the manual input element (6) has for the position-by-position letter selection a joystick, which can be actuated in the horizontal (1) and in the vertical (2) direction, to two sides in each case, in that, upon actuation to the left or right in the horizontal direction, in each case the step-by-step selection of the letter position to be input takes place and in that, upon actuation in the vertical direction up or down, a continuous or step-by-step running-through of the letter alphabet takes place.

4. Process according to Claim 1, characterised in that, as manual input element for the position-by-position letter selection, a screen with a touch entry means is used, which can be actuated in the horizontal (1) and in the vertical (2) direction, to two sides in each case, in that, upon actuation to the left or right in the horizontal direction, in each case the step-by-step selection of the letter position to be input takes place and in that, upon actuation in the vertical direction up or down, a continuous or step-by-step running-through of the letter alphabet takes place.

5. Process according to one of the preceding claims, characterised in that the respectively selected letter is output as a spoken utterance in the form of the announcement of the letters.

6. Process according to one of Claims 1 to 4, characterised in that the respectively selected letter is output as a spoken utterance, using a spelling alphabet.

7. Process according to one of the preceding claims, characterised in that, for abbreviating the input procedure, the running-through rate or the step increment of the letter alphabet is variable.

8. Process according to Claim 7, characterised in that the variation takes place as a function of the actuating force and/or of the actuating travel of the input element.

9. Process according to one of the preceding claims, characterised in that, for abbreviating the input procedure by using the probability of occurrence of individual letters and/or groups of letters, only a subset of the letter alphabet is run through.

10. Process according to one of the preceding claims, characterised in that, if it is not known completely how to spell a destination name or for the purpose of abbreviation, parts of the destination name are substituted by question marks.


**Revendications**

1. Procédé de sélection ou d'entrée de la destination dans un système de navigation d'un véhicule, en utilisant un élément d'entrée manuel, un affichage optique, une sortie vocale, et un calculateur numérique, procédé caractérisé en ce que lors de l'actionnement de l'élément d'entrée en direction horizontale (1), l'emplacement du caractère à entrer est sélectionné, tandis que lors de l'actionnement de l'élément d'entrée, en direction verticale (2), l'alphabet est parcouru jusqu'à ce que le caractère à entrer soit obtenu, en ce que ce processus de sélection est représenté sur l'affichage optique (3), tandis qu'un accusé de réception acoustique du processus de sélection est effectué par la sortie vocale (5, 8), et en ce que le traitement du processus d'entrée ou de sélection est effectué par un calculateur numérique (7).

2. Procédé selon la revendication 1, caractérisé en ce que l'élément d'entrée manuel (6) comporte pour la sélection des caractères par emplacement, deux bascules perpendiculaires l'une à l'autre, qui sont susceptibles d'être actionnées en direction horizontale (1) et en direction verticale (2) de respectivement deux côtés, en ce que, lors de l'actionnement à gauche ou à droite en direction horizontale, il s'effectue respectivement la sélection pas à pas de l'emplacement du caractère à entrer, et en ce que lors de l'actionnement en direction verticale, vers le haut ou vers le bas, il s'effectue un parcours continu ou bien pas à pas de l'alphabet.

3. Procédé selon la revendication 1, caractérisé en ce que l'élément d'entrée manuel (6) pour la sélection de caractères par emplacement, comporte un levier de commande qui est susceptible d'être actionné en direction horizontale (1) et en direction verticale (2) vers respectivement deux côtés, en ce que, lors de l'actionnement vers la gauche ou vers la droite en direction horizontale, il s'effectue respectivement la sélection pas à pas de l'emplacement du caractère à entrer, et en ce que lors de l'actionnement en direction verticale vers le haut ou vers le bas, il s'effectue un parcours continu ou bien pas à pas de l'alphabet.

4. Procédé selon la revendication 1, caractérisé en ce que, comme élément d'entrée pour la sélection des caractères par emplacements, on utilise un écran avec une entrée par contact qui est susceptible d'être actionnée en direction horizontale (1) et en direction verticale (2) vers respectivement deux côtés, en ce que, lors de l'actionnement à gauche ou à droite, en direction horizontale, il s'effectue respectivement la sélection pas à pas de l'emplacement du caractère à entrer, et en ce que, lors de l'actionnement en direction verticale vers le haut ou vers le bas, il s'effectue un parcours continu ou bien pas à pas de l'alphabet.

5. Procédé selon une des précédentes revendications, caractérisé en ce que le caractère respectivement sélectionné, est sorti en tant qu'expression vocale, sous la forme de l'annonce des caractères.

6. Procédé selon une des revendications 1 à 4, caractérisé en ce que le caractère respectivement sélectionné, est sorti sous la forme d'expression vocale en utilisant un alphabet d'épellation.

7. Procédé selon une des précédentes revendications, caractérisé en ce que, pour raccourcir le processus d'entrée, la vitesse de parcours ou la largeur de pas de l'alphabet est susceptible de varier.

8. Procédé selon la revendication 7, caractérisé en ce que la variation s'effectue en fonction de l'effort d'actionnement de l'élément d'entrée.

9. Procédé selon une des précédentes revendications, caractérisé en ce que pour raccourcir le processus d'entrée, en exploitant la probabilité d'apparition de caractères individuels et/ou de groupes de caractères, seule une quantité partielle de l'alphabet est parcourue.

10. Procédé selon une des précédentes revendications, caractérisé en ce qu'en cas d'une connaissance insuffisante de l'orthographe d'un nom de destination, ou bien pour permettre un raccourcissement, des parties du nom de la destination sont remplacées par des points d'interrogation.

Fig. 1

Fig.2